# DEMANDE DE BREVET EUROPEEN

(11) **EP 4 477 589 A1**
(43) Date de publication de la demande: **18.12.2024**
(21) Numéro de dépôt: 24179501.2
(22) Date de dépôt: 03.06.2024
(51) Int. Cl.: B65G 57/06, B65G 57/24

(54) **PROCÉDÉ DE PALETTISATION COMPORTANT UNE ÉTAPE DE RÉALISATION DE DEUX COUCHES SUR UNE FAUSSE PALETTE ET DISPOSITIF POUR SA MISE EN OEUVRE**

(30) Priorité: 12.06.2023 FR 2305916
(71) Demandeur: Cetec Industrie Conditionnement, 24052 Périgueux (FR)
(72) Inventeur: LABRUE, Régis, 24000 PERIGUEUX (FR); MONDARY, Jean-François, 24640 BASSILAC-ET-AUBEROCHE (FR); DUVERGE, Jean-Baptiste, 24600 SAINT-MARTIN DE RIBERAC (FR)
(74) Mandataire: Fantin, Laurent

(57) **Abrégé**

L'invention a pour objet un procédé de palettisation comprenant une étape de remplissage de chaque palette (34) lors de laquelle la palette (34) positionnée sur un support (46) descend progressivement et les sacs sont agencés couche par couche sur une fausse palette (52), une étape d'évacuation de chaque palette (34) pleine et une étape d'approvisionnement en palette vide lors de laquelle une palette vide située sur le support (46) est positionnée juste dessous la fausse palette (52) ; caractérisé en ce que, pour chaque nouvelle palette (34), le procédé de palettisation comprend une étape de réalisation de plus d'une couche sur la fausse palette (52) lors de l'étape d'évacuation de la palette précédente et l'étape d'approvisionnement de la nouvelle palette vide.

## Description

La présente demande se rapporte à un procédé de palettisation comportant une étape de réalisation de deux couches sur une fausse palette ainsi qu'à un dispositif pour sa mise en oeuvre.

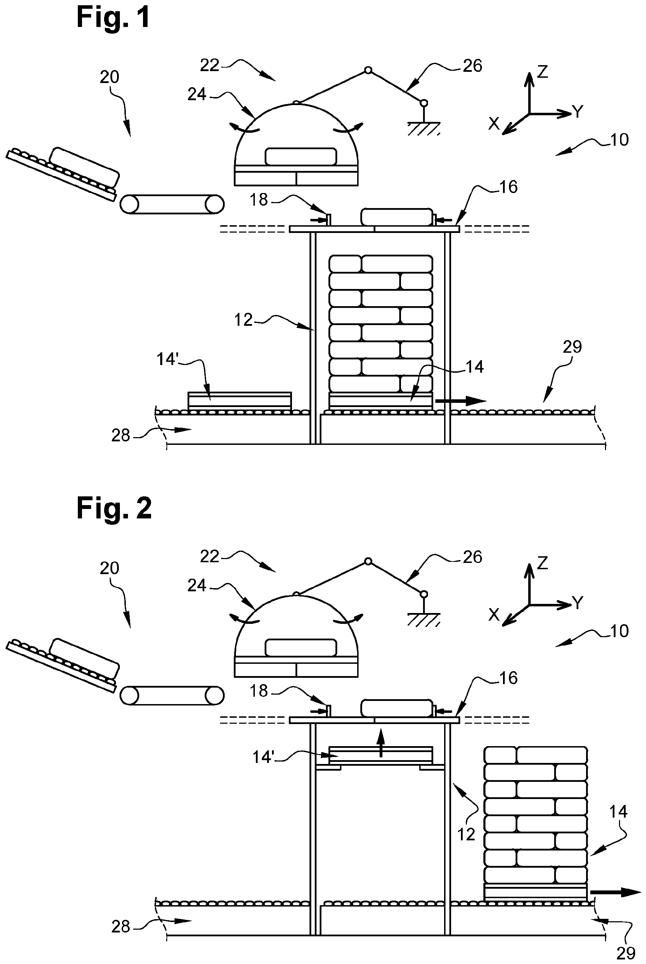

Selon un mode de réalisation connu visible sur les figures 1 et 2, un dispositif de palettisation 10 comprend :
- au moins un ascenseur 12 configuré pour déplacer verticalement une palette 14 lors de son remplissage,
- une fausse palette 16, positionnée au-dessus de l'ascenseur 12, configurée pour occuper un état fermé (en trait plein) dans lequel une couche de sacs est formée sur la fausse palette 16 et un état ouvert (en pointillé) dans lequel la couche de sacs formée sur la fausse palette 16 est posée sur la dernière couche de sacs de la palette 14,
- un cadre 18, positionné au-dessus de la fausse palette 16, permettant de conformer la couche de sacs formée sur la fausse palette 16,
- un système d'alimentation en sacs 20 configuré pour alimenter le dispositif de palettisation en sacs les uns à la suite des autres,
- un système de pose 22, positionné au-dessus de la fausse palette 16, configuré pour saisir les sacs en sortie du système d'alimentation en sacs 20 et les positionner selon un agencement déterminé sur la fausse palette 16.

A l'exception de ses mouvements d'ouverture et de fermeture, la fausse palette 16 est immobile et reliée à l'ascenseur 12.

Selon une configuration, le système d'alimentation en sacs 20 est configuré pour alimenter les sacs à une hauteur donnée fixe et selon une orientation identique pour tous les sacs.

Selon un mode de réalisation, le système de pose 22 comprend une tête 24, configurée pour occuper un état fermé dans lequel elle supporte un sac et un état ouvert dans lequel elle laisse tomber le sac sur la fausse palette 16, ainsi qu'un bras robotisé 26, supportant la tête 24, configuré pour la déplacer dans l'espace selon au moins une rotation autour d'un axe vertical Z et selon deux translations sensiblement horizontales X et Y.

Le dispositif de palettisation 10 comprend également un système d'alimentation en palettes vides 28 ainsi qu'un système d'évacuation des palettes pleines 29.

Selon un mode opératoire, lorsqu'une palette 14 est pleine comme illustré sur la figure 1, elle est évacuée vers le système d'évacuation des palettes pleines 29. En parallèle, une palette 14' vide est introduite dans l'ascenseur 12, depuis le système d'alimentation en palettes vides 28, puis remontée par l'ascenseur 12 pour être positionnée juste au-dessous de la fausse palette 16.

Dans certains cas, le temps nécessaire pour réaliser une couche sur la fausse palette 16 est inférieur à celui nécessaire pour évacuer la palette 14 pleine et positionner une nouvelle palette 14' vide juste au-dessous de la fausse palette 16. Dans ces cas, il est alors nécessaire de ralentir la cadence de palettisation au moment du changement de palette.

Pour remédier à ce problème, le document FR3040375 propose de positionner le système d'alimentation en palettes vides en hauteur au niveau de la fausse palette 16 pour que chaque palette vide soit introduite via la fausse palette 16. Le positionnement en hauteur de l'alimentation en palettes vides 28 peut s'avérer problématique. De plus, il est nécessaire de ralentir la cadence de palettisation pour permettre d'introduire une palette vide depuis la fausse palette 16.

La présente invention vise à remédier à tout ou partie des inconvénients de l'art antérieur.

A cet effet, l'invention a pour objet un procédé de palettisation permettant de poser sur une palette, couche par couche, des sacs selon un agencement prédéterminé pour chaque couche. Le procédé comprend une étape de remplissage de chaque palette lors de laquelle la palette positionnée sur un support descend progressivement et les sacs sont agencés couche par couche sur une fausse palette, une étape d'évacuation de chaque palette pleine ainsi qu'une étape d'approvisionnement en palette vide lors de laquelle une palette vide située sur le support est positionnée juste dessous la fausse palette.

Selon l'invention, pour chaque nouvelle palette, le procédé de palettisation comprend une étape de réalisation de plus d'une couche sur la fausse palette lors de l'étape d'évacuation de la palette précédente et de l'étape d'approvisionnement de la nouvelle palette vide.

Contrairement à l'art antérieur, deux couches de sacs sont posées, l'une sur l'autre, sur la fausse palette lors du changement de palette si bien qu'il n'est pas nécessaire de ralentir la cadence de palettisation.

D'autres caractéristiques et avantages ressortiront de la description de l'invention qui va suivre, description donnée à titre d'exemple uniquement, en regard des dessins annexés parmi lesquels :
- La figure 1 est une représentation schématique de côté d'un dispositif de palettisation qui illustre un mode de réalisation de l'art antérieur à un premier instant,
- La figure 2 est une représentation schématique de côté d'un dispositif de palettisation qui illustre un mode de réalisation de l'art antérieur à un deuxième instant,
- La figure 3 est une représentation schématique de côté d'un dispositif de palettisation qui illustre un mode de réalisation de l'invention à un premier instant,
- La figure 4 est une représentation schématique de côté d'un dispositif de palettisation qui illustre un mode de réalisation de l'invention à un deuxième instant,
- La figure 5 est une représentation schématique de côté d'un dispositif de palettisation qui illustre un mode de réalisation de l'invention à un troisième instant,
- La figure 6 est une représentation schématique de côté d'un dispositif de palettisation qui illustre un mode de réalisation de l'invention à un quatrième instant,
- La figure 7 est une représentation schématique de côté d'un dispositif de palettisation qui illustre un mode de réalisation de l'invention à un cinquième instant,
- La figure 8 est une représentation schématique de côté d'un dispositif de palettisation qui illustre un mode de réalisation de l'invention à un sixième instant,
- la figure 9 est une représentation schématique de côté d'un dispositif de palettisation qui illustre un mode de réalisation de l'invention à un septième instant, et
- la figure 10 est une représentation schématique de côté d'un dispositif de palettisation qui illustre un mode de réalisation de l'invention à un huitième instant.

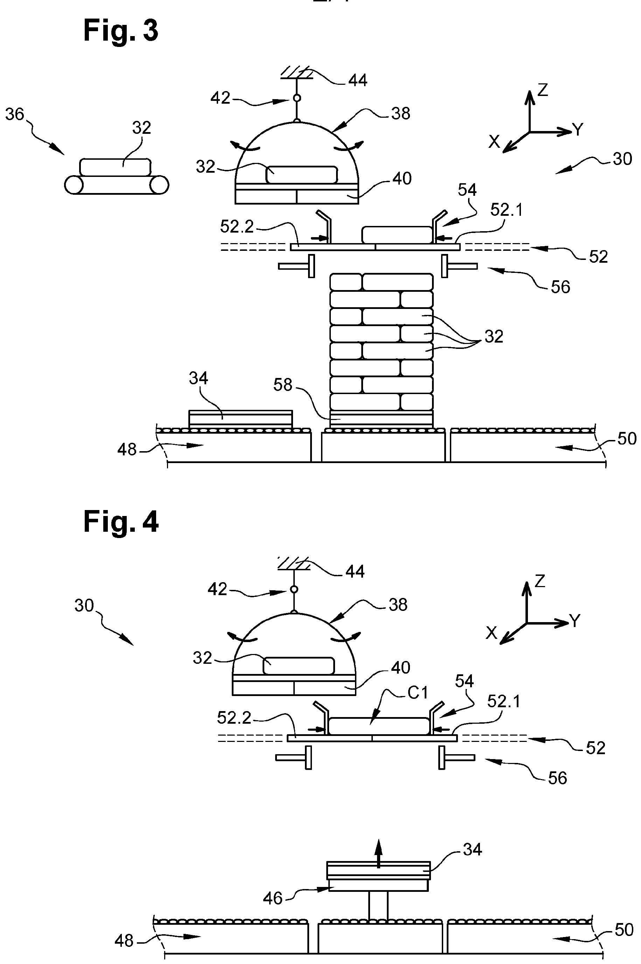

Sur les figures 3 à 10, on a représenté un dispositif de palettisation 30 adapté pour stocker des sacs 32.

Les sacs ont une forme approximativement parallélépipédique. Sur la palette 34, les sacs 32 sont regroupés par couches qui sont superposées les unes sur les autres. Chaque couche comprend plusieurs sacs. Dans chaque couche, les sacs 32 sont positionnés selon un agencement prédéterminé. Ainsi, certains sacs 32 sont orientés selon une première direction de pose X et d'autres selon une deuxième direction de pose Y.

Le dispositif de palettisation 30 comprend un système d'alimentation en sacs 36 configuré pour acheminer les sacs les uns à la suite des autres en un point donné et selon une orientation d'alimentation donnée. Selon une configuration, l'orientation d'alimentation est parallèle à l'une des première ou deuxième directions de pose X ou Y.

Le système d'alimentation en sacs 36 achemine les sacs à une hauteur donnée fixe. Bien entendu, l'invention n'est pas limitée à cette configuration. Le système d'alimentation en sacs 36 pourrait acheminer les sacs à des hauteurs variables, en fonction notamment du niveau de remplissage de la palette 34.

Selon un mode de réalisation, le système d'alimentation en sacs 36 comprend au moins un convoyeur 36.1.

Le dispositif de palettisation 30 comprend un système de pose 38, positionné dans le prolongement du système d'alimentation en sacs 36, configuré pour supporter au moins un sac 32 en sortie du système d'alimentation en sacs 36 et l'orienter selon l'une des première ou deuxième directions de pose X ou Y. Selon un agencement, le système de pose 38 est positionné dans le prolongement du convoyeur 36.1.

Selon un mode de réalisation, le système de pose 38 comprend une tête 40 configurée pour occuper un état fermé dans lequel elle supporte un sac et un état ouvert dans lequel elle laisse tomber le sac. Cette tête 40 n'est pas plus décrite car elle peut être identique à celles de l'art antérieur. Le système de pose 38 comprend au moins une articulation 42 reliant la tête 40 à un châssis fixe 44 ainsi qu'au moins un actionneur configuré pour déplacer la tête 40 par rapport au châssis fixe 44.

Selon une configuration, l'articulation 42 est configurée pour permettre à la tête 40 de pivoter uniquement autour d'un axe vertical Z. Selon une autre configuration, l'articulation 42 est configurée pour permettre à la tête 40 de se déplacer dans un plan horizontal X, Y. Selon une autre configuration, le système de pose 38 comprend plusieurs articulations, comme un bras polyarticulé par exemple, configurées pour permettre à la tête 40 de se déplacer selon plusieurs translations et/ou selon plusieurs rotations.

Quel que soit le mode de réalisation, le dispositif de palettisation 30 comprend un système d'alimentation et de pose 38, en une ou plusieurs partie(s), configuré pour poser des sacs au-dessus de la palette 34.

Le dispositif de palettisation 30 comprend un support 46 mobile verticalement sur lequel repose une palette 34 à remplir. Selon une configuration, ce support 46 mobile est solidaire d'un vérin télescopique vertical. Bien entendu, l'invention n'est pas limitée à cette configuration. Ainsi, le support 46 pourrait être intégré à un ascenseur, notamment à un ascenseur à chaînes.

Le dispositif de palettisation 30 comprend également un système d'alimentation en palettes vides 48 ainsi qu'un système d'évacuation des palettes pleines 50. Le support 46 mobile, le système de pose 38, le système d'alimentation en palettes vides 46 ainsi que le système d'évacuation des palettes pleines 50 ne sont pas plus décrits car ils peuvent être identiques à ceux de l'art antérieur.

Le dispositif de palettisation 30 comprend une fausse palette 52 sur laquelle chaque couche de sacs est formée avant d'être posée sur la palette 34.

Selon un mode de réalisation, la fausse palette 52 comprend deux demi-plaques 52.1, 52.2 configurées pour occuper un état fermé dans lequel elles sont jointives pour permettre la formation d'au moins une couche et un état ouvert dans lequel elles sont écartées de manière à ce que la (ou les) couche(s) de sacs formée(s) sur la fausse palette 52 soi(en)t posée(s) sur la dernière couche de sacs de la palette ou sur la palette vide.

Ben entendu, l'invention n'est pas limitée à ce mode de réalisation pour la fausse palette 52. Quel que soit le mode de réalisation, la fausse palette 52 est positionnée entre le système de pose 38 et le support 46 sur lequel est positionnée une palette 34 à remplir, et configurée pour occuper un premier état dans lequel la fausse palette 52 supporte des sacs de manière à former des couches de sacs et un deuxième état dans lequel la fausse palette 52 laisse tomber les sacs, préalablement supportés par la fausse palette 52, sur la palette 34.

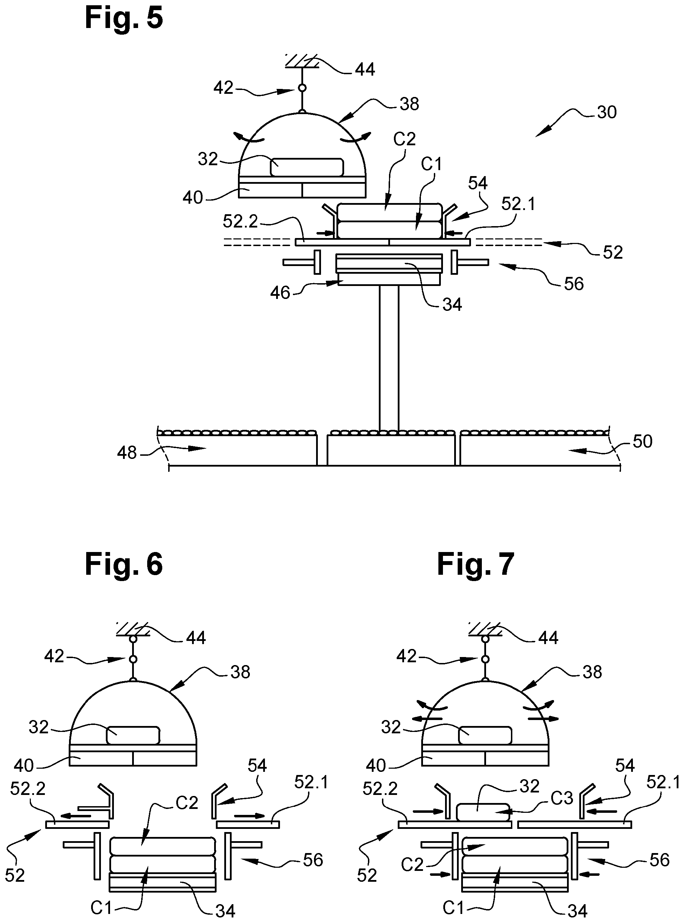

Selon une caractéristique importante, la fausse palette 52 est dimensionnée pour supporter au moins deux couches de sacs, comme illustré sur la figure 5 par exemple.

Selon un mode de réalisation, au moins un élément parmi la fausse palette 52 et le système de pose 38 est mobile par rapport à l'autre pour que la distance séparant le système de pose 38 et la surface de pose des sacs positionnée sur la fausse palette 52 soit sensiblement constante. Ainsi, lorsque le système de pose 38 pose des sacs sur la fausse palette 52, le système de pose 38 est séparé de la fausse palette 52 d'une première distance. Lorsque le système de pose 38 positionne des sacs sur une couche complète déjà positionnée sur la fausse palette 52, le système de pose 38 est séparé de la couche complète d'une deuxième distance sensiblement égale à la première distance. Ainsi, les sacs lâchés par le système de pose 38 tombent toujours de la même hauteur.

Selon une configuration, la fausse palette 52 est fixe en hauteur. Seul le système de pose 38 change de position en hauteur en fonction de la couche posée sur la fausse palette 52, le système de pose 38 étant décalé vers le haut après la réalisation d'une couche de sacs directement posée sur la fausse palette 52, pour réaliser une deuxième couche de sacs posée sur la couche de sacs déjà posée sur la fausse palette 52.

Selon une autre configuration, le système de pose 38 reste fixe en hauteur. Seule la fausse palette 52 change de position en hauteur en fonction de la couche posée sur la fausse palette 52, la fausse palette 52 étant décalée vers le bas après la réalisation d'une couche de sacs directement posée sur la fausse palette 52, pour réaliser une deuxième couche de sacs posée sur la couche de sacs déjà posée sur la fausse palette 52.

Selon une autre configuration, le système de pose 38 et la fausse palette 52 changent de position en hauteur en fonction de la couche posée sur la fausse palette 52.

Selon un mode de réalisation, au moins un élément parmi le système de pose 38 et la fausse palette 52 se déplace horizontalement lors de la pose des sacs sur la fausse palette 52.

Selon une configuration, le système de pose 38 reste immobile et ne peut que pivoter autour d'un axe vertical afin de modifier l'orientation des sacs. Selon cette configuration, la fausse palette 52 se déplace horizontalement pour que le sac posé par le système de pose 38 soit correctement positionné sur la fausse palette 52.

Selon une autre configuration, la fausse palette 52 est immobile dans un plan horizontal. Seul le système de pose 38 se déplace dans un plan horizontal pour positionner chaque sac correctement sur la fausse palette 52.

Selon une autre configuration, le système de pose 38 et la fausse palette 52 peuvent se déplacer horizontalement.

La fausse palette 52 est reliée au châssis fixe 44 par une liaison qui peut être plus ou moins complexe en fonction de la cinématique de la fausse palette 52. Selon une configuration, la liaison est une liaison glissière permettant le changement d'état de la fausse palette 52. Selon une autre configuration, la fausse palette 52 est reliée à une structure par une première liaison permettant le changement d'état de la fausse palette 52 et la structure est reliée au châssis fixe par au moins une deuxième liaison permettant à la structure de se déplacer verticalement et/ou horizontalement.

Comme illustré sur la figure 3, toutes les couches de sacs posées sur la palette 34 présentent une section horizontale constante.

Le dispositif de palettisation 30 comprend un premier système de conformation 54 positionné juste au-dessus de la fausse palette 52 et configuré pour conformer au moins une couche de sacs positionnée sur la fausse palette 52 ainsi qu'un deuxième système de conformation 56 positionné juste au-dessous de la fausse palette 52 et configuré pour conformer au moins une couche de sacs positionnée sous la fausse palette 52.

Par « positionné juste au-dessus ou juste au-dessous », on entend une distance inférieure à la hauteur d'une couche de sacs.

Selon une configuration, au moins un élément parmi les premier et deuxième systèmes de conformation 54, 56 présente une hauteur suffisante pour compacter deux couches de sacs. Selon un mode de réalisation, les premier et deuxième systèmes de conformation 54, 56 présentent chacun une hauteur suffisante pour compacter deux couches de sacs.

Les premier et deuxième systèmes de conformation 54, 56 sont cinématiquement liés à la fausse palette 52. Lorsque cette dernière est reliée à une structure mobile verticalement et/ou horizontalement par rapport au châssis fixe 44, les premier et deuxième systèmes de compactage 54, 56 sont reliés à cette structure mobile.

Selon un mode de réalisation, chacun des premier et deuxième systèmes de conformation 54, 56 présente une section horizontale constante égale à la section horizontale d'une couche de sacs. Chacun d'eux peut être configuré pour conformer une ou deux couche(s). Selon un autre mode de réalisation, au moins l'un des premier et deuxième systèmes de conformation 54, 56 est mobile entre un état resserré dans lequel il présente une section horizontale égale à la section horizontale d'une couche de sacs et un état écarté dans lequel il présente une section horizontale supérieure à celle d'une couche de sacs.

Le dispositif de palettisation 30 comprend un système de contrôle configuré pour contrôler la position en hauteur du support 46, les déplacements du système de pose 38, l'état ouvert/fermé de la tête 40 du système de pose, l'état de la fausse palette 52 et ses éventuels déplacements ainsi que l'état des premier et deuxième systèmes de conformation 54, 56.

Comme illustré sur les figures 3 à 10, le procédé de palettisation comprend une étape d'évacuation d'une palette pleine 58. Quasiment simultanément, le remplissage d'une nouvelle palette 34 commence. Ainsi, pendant cette étape d'évacuation, la fausse palette 52 est dans le premier état et une nouvelle couche de sacs est réalisée directement sur la fausse palette 52. Le premier système de conformation 54 est à l'état resserré et le deuxième système de conformation 56 est à l'état écarté. Le fait que le premier système de conformation 54 soit à l'état resserré lors de la réalisation des couches posées sur la fausse palette 52 permet de conformer ces couches. Comme illustré sur la figure 4, une nouvelle palette 34 vide est positionnée sur le support 46 qui remonte pour la positionner juste sous la fausse palette 52, comme illustré sur la figure 5. Lors de l'évacuation de la palette pleine 58 et de l'arrivée d'une nouvelle palette 34 juste sous la fausse palette 52, contrairement à l'art antérieur, deux couches de sacs C1, C2 sont posées, l'une sur l'autre, sur la fausse palette 52. Par conséquent, la cadence de palettisation n'est pas ralentie. Les deux couches de sacs C1, C2 sont compactées par le premier système de conformation 54.

Dès que la palette 34 vide est positionnée juste au-dessous de la fausse palette 52, cette dernière change d'état et s'ouvre, comme illustré sur la figure 6, de sorte que les deux premières couches C1 et C2 tombent sur la palette 34. Lors de cette chute, les premier et deuxième systèmes de conformation 54, 56 sont à l'état écarté pour ne pas interférer avec les couches C1 et C2. Juste après l'ouverture de la fausse palette 52, le support 46 se décale vers le bas d'une distance sensiblement égale à deux fois l'épaisseur d'une couche de sacs.

Dès que le support 46 est suffisamment décalé vers le bas (la deuxième couche C2 étant positionnée juste en dessous de la fausse palette 52), la fausse palette 52 revient dans le premier état fermé, comme illustré sur la figure 7, et une nouvelle couche de sacs C3 est posée par le système de pose 38 directement sur la fausse palette 52. Dès la fermeture de cette dernière, les premier et deuxième systèmes de conformation 54, 56 changent d'état et passent à l'état resserré. Ainsi, les première et deuxième couches C1, C2 juste posées sur la palette 34 sont compactées latéralement pour compenser un éventuel désalignement lors de leur chute. Dès que les première et deuxième couches C1 et C2 sont compactées, le deuxième système de conformation 56 revient à l'état écarté. Le premier système de conformation 54 reste à l'état resserré. Ainsi, les couches réalisées sur la fausse palette 52 sont correctement conformées.

Selon un premier mode opératoire, dès que les troisième et quatrième couches sont réalisées sur la fausse palette 52, cette dernière s'ouvre et les troisième et quatrième couches tombent sur la palette 34. Juste après l'ouverture de la fausse palette 52, le support 46 se décale vers le bas d'une hauteur sensiblement égale à deux fois la hauteur d'une couche de sacs. Dès que le support 46 est suffisamment décalé vers le bas (la quatrième couche C4 étant positionnée juste en dessous de la fausse palette 52), la fausse palette 52 revient dans le premier état fermé et une nouvelle couche de sacs est posée par le système de pose 38 directement sur la fausse palette 52. Dès la fermeture de cette dernière, les premier et deuxième systèmes de conformation 54, 56 changent d'état et passent à l'état resserré. Ainsi, les deux nouvelles couches C3, C4 juste posées sur la palette 34 sont compactées latéralement pour compenser un éventuel désalignement lors de leur chute. Dès que les deux nouvelles couches C3 et C4 sont compactées, le deuxième système de conformation 56 revient à l'état écarté. Le premier système de conformation 54 reste à l'état resserré. Ainsi, les couches réalisées sur la fausse palette 52 sont correctement conformées.

Ce cycle de pose de deux couches est reproduit jusqu'à ce que la palette 34 soit remplie.

Selon un deuxième mode opératoire, après la pose des deux première et deuxième couches C1, C2 sur la palette 34, les couches sont réalisées une par une sur la fausse palette 52. Ainsi, après la formation de chaque couche sur la fausse palette 52, cette dernière passe à l'état ouvert et la couche formée sur la fausse palette 52 chute sur la dernière couche de la palette 34.

Selon un troisième mode opératoire, le procédé de palettisation comprend plusieurs cycles comportant chacun :
- une étape de réalisation d'une couche complète C3 et d'une couche non complète C4 sur la fausse palette 52,
- avant la fin de la réalisation de la couche non complète C4, une étape d'ouverture de la fausse palette 52 de sorte que la couche complète C3 et la couche non complète C4 tombent sur la dernière couche située sur la palette 34,
- une étape de pose de sacs pour finir la couche non complète C4,
- une étape de descente de la palette 34 afin que toutes les couches situées sur la palette 34 soient positionnées sous la fausse palette 52, et
- une étape de fermeture de la fausse palette 52.

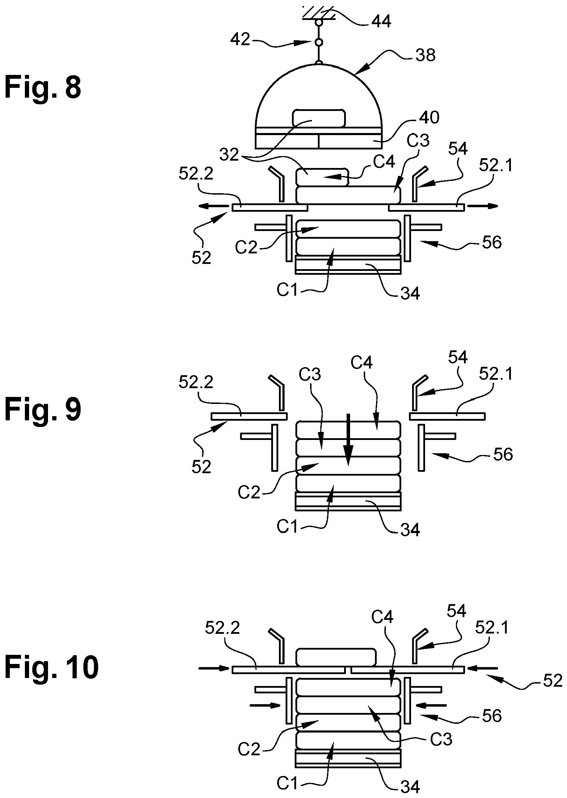

Lors de l'étape de réalisation de la couche complète C3 et de la couche non complète C4 sur la fausse palette 52, le premier système de conformation 54 est en position resserrée pour conformer les deux couches C3, C4. Lors de l'étape de l'ouverture de la fausse palette 52, le deuxième système de conformation 56, qui est à l'état écarté, passe à l'état resserré après la chute des deux couches C3, C4. Dès que la couche non complète C4 est terminée, le deuxième système de conformation 56 revient à l'état écarté pour ne pas interférer avec les couches posées sur la palette 34, et le support 46 est décalé vers le bas jusqu'à ce que la quatrième couche C4 soit positionnée juste au-dessous de la fausse palette 52. La fausse palette 52 est alors refermée. Après la fermeture de la fausse palette 52, le deuxième système de conformation 56 conforme les deux dernières couches C3, C4 posées sur la palette 34, comme illustré sur la figure 10, puis revient à l'état écarté. Un nouveau cycle de deux nouvelles couches peut recommencer.

Quel que soit le mode opératoire, le procédé de palettisation comprend une étape de remplissage de chaque palette 34 lors de laquelle la palette 34, positionnée sur un support 46, descend progressivement et les sacs sont agencés couche par couche sur une fausse palette 52, une étape d'évacuation de chaque palette 34 pleine et enfin une étape d'approvisionnement en palette vides lors de laquelle une palette vide positionnée sur le support 46 est positionnée juste au-dessous de la fausse palette. Selon une caractéristique essentielle, pour chaque nouvelle palette 34, le procédé de palettisation comprend une étape de réalisation de plus d'une couche sur la fausse palette 52 lors de l'étape d'évacuation de la palette précédente et de l'étape d'approvisionnement d'une nouvelle palette vide. Selon un mode opératoire, deux couches complètes sont réalisées sur la fausse palette 52 lors de l'étape d'évacuation de la palette précédente et de l'étape d'approvisionnement de la nouvelle palette vide. Selon un autre mode opératoire, une couche complète et une couche non complète sont réalisées sur la fausse palette 52 lors de l'étape d'évacuation de la palette précédente et de l'étape d'approvisionnement de la nouvelle palette vide.

## Revendications

1. Procédé de palettisation permettant de poser sur une palette (34), couche par couche, des sacs (32) selon un agencement prédéterminé pour chaque couche, le procédé comprenant une étape de remplissage de chaque palette (34) lors de laquelle la palette (34) positionnée sur un support (46) descend progressivement et les sacs sont agencés couche par couche sur une fausse palette (52), une étape d'évacuation de chaque palette (34) pleine ainsi qu'une étape d'approvisionnement en palettes vides lors de laquelle une palette vide située sur le support (46) est positionnée juste au-dessous de la fausse palette (52) ; **caractérisé en ce que**, pour chaque nouvelle palette (34), le procédé de palettisation comprend une étape de réalisation de plus d'une couche sur la fausse palette (52) lors de l'étape d'évacuation de la palette précédente et de l'étape d'approvisionnement de la nouvelle palette vide.

2. Procédé de palettisation selon la revendication 1, **caractérisé en ce que** deux couches complètes sont réalisées sur la fausse palette (52) lors de l'étape d'évacuation de la palette précédente et de l'étape d'approvisionnement de la nouvelle palette vide.

3. Procédé de palettisation selon la revendication 1, **caractérisé en ce qu'**une couche complète et une couche non complète sont réalisées sur la fausse palette (52) lors de l'étape d'évacuation de la palette précédente et de l'étape d'approvisionnement de la nouvelle palette vide.

4. Procédé de palettisation selon l'une des revendications précédentes, **caractérisé en ce que** le procédé de palettisation comprend plusieurs cycles comportant chacun :
- une étape de réalisation d'une couche complète (C3) et une couche non complète (C4) sur la fausse palette (52),
- avant la fin de la réalisation de la couche non complète (C4), une étape d'ouverture de la fausse palette (52) de sorte que la couche complète (C3) et la couche non complète (C4) tombent sur une dernière couche située sur la palette (34),
- une étape de pose de sacs pour finir la couche non complète (C4),
- une étape de descente de la palette (34) afin que toutes les couches situées sur la palette (34) soient positionnées sous la fausse palette (52), et
- une étape de fermeture de la fausse palette (52).

5. Procédé de palettisation selon la revendication précédente, **caractérisé en ce que** lors de l'étape de réalisation de la couche complète (C3) et de la couche non complète (C4) sur la fausse palette (52), un premier système de conformation (54) conforme les deux couches (C3, C4) situées sur la fausse palette (52).

6. Procédé de palettisation selon la revendication 4 ou 5, **caractérisé en ce que** lors de l'étape de pose de sacs pour finir la couche non complète (C4), un deuxième système de conformation (56) conforme les deux couches (C3, C4) juste posées sur la palette (34).

7. Procédé de palettisation selon la revendication précédente, **caractérisé en ce que** lors de l'étape de descente de la palette (34), le deuxième système de conformation (56) est écarté.

8. Procédé de palettisation selon la revendication 6 ou 7, **caractérisé en ce qu'**après l'étape de fermeture de la fausse palette (52), le deuxième système de conformation (56) conforme les deux dernières couches (C3, C4) posées sur la palette (34) puis est écarté.

9. Dispositif de palettisation permettant de mettre en oeuvre le procédé de palettisation selon l'une des revendications précédentes, le dispositif de palettisation comprenant un support (46) mobile verticalement sur lequel repose une palette (34) à remplir, un système d'alimentation et de pose (38) configuré pour poser des sacs au-dessus de la palette (34) ainsi qu'une fausse palette (52) positionnée entre le système d'alimentation et de pose (38) et le support (46) et configurée pour occuper un premier état dans lequel la fausse palette (52) supporte des sacs et un deuxième état dans lequel la fausse palette (52) laisse tomber les sacs, préalablement supportés par la fausse palette (52), sur la palette (34) à remplir ; **caractérisé en ce que** la fausse palette (52) est dimensionnée pour supporter au moins deux couches de sacs.

10. Dispositif de palettisation selon la revendication précédente, **caractérisé en ce qu'**il comprend un premier système de conformation (54) positionné juste au-dessus de la fausse palette (52) et configuré pour conformer au moins une couche de sacs positionnée sur la fausse palette (52) ainsi qu'un deuxième système de conformation (56) positionné juste au-dessous de la fausse palette (52) et configuré pour conformer au moins une couche de sacs positionnée sous la fausse palette (52).
